# EUROPÄISCHE PATENTSCHRIFT

(11) **EP 4 484 798 B1**
(45) Veröffentlichungstag und Bekanntmachung des Hinweises auf die Patenterteilung: **16.09.2026**
(21) Anmeldenummer: 24184906.6
(22) Anmeldetag: 27.06.2024
(51) Int. Cl.: F16H 7/08

(54) **DYNAMISCHES SPANNSYSTEM FUER ENDLOSZUGMITTEL**
DYNAMIC TENSIONING SYSTEM FOR ENDLESS TRACTION MEANS
SYSTEME DE SERRAGE DYNAMIQUE POUR ELEMENTS DE TRACTION SANS FIN

(30) Priorität: 27.06.2023 DE 102023116875
(43) Veröffentlichungstag der Anmeldung: 01.01.2025
(73) Patentinhaber: MESSRING GmbH, 82205 Gilching (DE)
(72) Erfinder: Schieche, Philip, 82205 Gilching (DE)
(74) Vertreter: Grünecker Patent- und Rechtsanwälte PartG mbB

(56) Entgegenhaltungen:
- EP-A1- 1 709 888
- EP-A2- 2 275 196
- DE-C2- 10 013 340
- DE-U1- 202019 105 233

## Beschreibung

Die vorliegende Erfindung betrifft ein dynamisches Spannsystem für Endloszugmittel nach den Merkmalen des unabhängigen Anspruchs 1.

Ein gattungsgemäßes dynamisches Spannsystem für Endloszugmittel umfasst einen Aktuator und ein erstes Umlenkelement, wobei der Aktuator mit dem ersten Umlenkelement zusammenwirkt und wobei der Aktuator eine Zustellung des ersten Umlenkelements relativ zum Endloszugmittel ermöglicht, um die Vorspannung des Endloszugmittels zu ändern.

Endloszugsysteme werden zur Übertragung von rotatorischen Antriebskräften eingesetzt, insbesondere dann, wann zwischen Antrieb und Abtrieb ein gewisser Abstand zu überwinden ist. Als Endloszugmittel und damit zur Kraftübertragung können Seile, Ketten und Riemen in verschiedensten Ausprägungen zum Einsatz kommen. Je nach Anwendung und Einsatzgebiet benötigen Endloszugsysteme Spannvorrichtungen, um die zur Kraftübertragung benötigte Traktionskraft zwischen Endloszugmittel und Treibscheibe in den maßgeblichen Betriebsbereichen aufrechtzuerhalten bzw. auf einen vordefinierten Wert einzustellen.

Speziell bei hohen Belastungen und hohen Anforderungen an die Genauigkeit ist ein dynamisches Halten der notwendigen Vorspannkraft im gesamten Zugsystem zur Vermeidung von Gleiten oder Überspringen des Endloszugmittels von der Treibscheibe notwendig. Die Ansprüche an das Spannsystem steigen auch mit zunehmender Länge des Endloszugsystems. Um die benötigte Vorspannung zu gewährleisten, bedarf es häufig großer Verfahrwege des zum Spannen eingesetzten Aktuators oder des Einsatzes mehrerer Aktoren, wodurch die Komplexität des Spannsystems steigt.

Aus der DE 100 13 340 A1 ist bereits ein dynamisches Spannsystem bekannt. Es wird eine Bandschleifmaschine beschrieben, deren Schleifband als Endloszugmittel ausgeführt ist, wobei die Bandspannung geregelt ist und mittels eines Aktuators derart eingestellt wird, dass an einer Kontaktrolle möglichst konstant eine vordefinierte Andruckkraft anliegt.

Das beschriebene Spannsystem ist allerdings nicht optimal für den Einsatz von langen Endloszugmitteln geeignet, deren Vorspannung einer dynamischen Regelung bedarf. Zum einen erhöht sich beim Einsatz langer Endloszugmittel der nötige Verfahrweg des Spannsystems zur Aufrechterhaltung der benötigten Vorspannung, was wiederum einer dynamischen Regelung entgegensteht. Zum anderen haben längere Verfahrwege einen vergrößerten Bauraumbedarf des Aktuators zur Folge.

Weiterer Stand der Technik ist aus den Dokumenten EP 2 275 196 A2, DE 20 2019 105233 U1 und EP 1 709 888 A1 bekannt.

Zur Überwindung der genannten Nachteile hat sich die vorliegende Erfindung zur Aufgabe gestellt, ein dynamisches Spannsystem für Endloszugmittel zur Verfügung zu stellen, das bei gleichbleibender Aktuatorgröße die Dynamik der Spannkraftregelung erhöht.

Die Aufgabe wird gelöst durch die Merkmale des unabhängigen Anspruchs 1.

Demnach liegt dann eine erfindungsgemäße Lösung der Aufgabe vor, wenn das Endloszugmittel als Seil oder Kette ausgeführt ist und das Spannsystem ein zweites Umlenkelement aufweist, wobei das zweite Umlenkelement mit dem Endloszugmittel in Eingriff steht und wobei das zweite Umlenkelement eingerichtet ist, mit dem ersten Umlenkelement und dem Endloszugmittel in der Art eines Flaschenzugs zusammenzuwirken.

Vorteilhafte Ausgestaltungen der vorliegenden Erfindung sind Gegenstand der Unteransprüche.

Gemäß einer vorteilhaften Ausführung der vorliegenden Erfindung umfasst das erste Umlenkelement eine erste Rolle und eine zweite Rolle, wobei die erste Rolle und die zweite Rolle derart angeordnet sind, dass das Endloszugmittel von den beiden Rollen nacheinander umgelenkt wird. Eine besonders einfache und kompakte Bauweise ist möglich, wenn die beiden Rollen im Wesentlichen parallel zueinander angeordnet sind, das bedeutet, dass die Ebenen, die in Normalrichtung zur jeweiligen Drehachse liegen, im Wesentlichen parallel zueinander verlaufen. Im Wesentlichen parallel bedeutet bei der vorliegenden Anordnung, dass der Winkel zwischen den beiden Ebenen einen Wert von 10° nicht überschreitet, vorteilhafterweise einen Wert von 5° nicht überschreitet und besonders vorteilhaft innerhalb der üblichen Lagetoleranz bei der Ausrichtung der beiden Rollen zueinander liegt.

Eine einfache und kompakte Bauweise ist auch dann möglich, wenn die Drehachsen der beiden Rollen im Wesentlichen koaxial zueinander ausgerichtet sind. Im Wesentlichen koaxial bedeutet bei der vorliegenden Ausführung, dass die Ebenen in Normalrichtung zu den Drehachsen im Wesentlichen parallel zueinander verlaufen und dass der Abstand der Drehachsen zueinander nicht größer ausgeführt ist als die Breite eine Rolle, vorzugsweise nicht breiter ausgeführt ist als die halbe Breite eine Rolle und besonders bevorzugt weisen die Achsen beider Rollen einen Abstand zueinander auf, der nicht über das Maß der üblichen Toleranz beim Einbau der Rollen hinausgeht.

Hinsichtlich eines einfachen und kompakten Aufbaus des ersten Umlenkelements ist es von Vorteil, wenn die erste und die zweite Rolle die gleiche Größe aufweisen. Denkbar ist aber auch, dass beide Rollen zwar gleich breit sind, jedoch einen unterschiedlichen Durchmesser aufweisen oder dass die beiden Rollen bei einer unterschiedlichen Breite den gleichen Durchmesser aufweisen. Vorzugsweise weisen jedoch beide Rollen dieselben technischen Maße auf und unterscheiden sich lediglich durch fertigungsbedingte Abweichungen.

In bestimmten Anwendungsfällen kann es jedoch auch denkbar sein, dass die beiden Rollen einen Winkel zueinander aufweisen, also ihre Drehachsen nicht koaxial zueinander ausgeführt sind. Das kann beispielsweise bei schwierigen Bauraumverhältnissen vorgesehen sein oder um eine bessere Führung des Endloszugmittels zu erreichen.

Gemäß einer weiteren vorteilhaften Ausführung der vorliegenden Erfindung umfasst das zweite Umlenkelement eine dritte Rolle.

Gemäß einer besonders vorteilhaften Ausführung der vorliegenden Erfindung ist das zweite Umlenkelement derart angeordnet, dass das Endloszugmittel zwischen den Umlenkungen durch die erste und die zweite Rolle vom zweiten Umlenkelement umgelenkt wird. Das erste Umlenkelement und das zweite Umlenkelement wirken demnach nach Art eines Flaschenzugs zusammen, wobei eines der beiden Umlenkelemente die für einen Flaschenzug nötige lose Rolle bildet und das jeweils andere Umlenkelement die feste Rolle bildet. Die dritte Rolle kann im Wesentlichen parallel zur ersten und zweiten Rolle angeordnet sein, zur Gewährleistung des Flaschenzugprinzips ist die dritte Rolle bzw. die Drehachse der dritten Rolle aber in jedem Fall in einem gewissen Abstand zur Drehachse der Rollen des ersten Umlenkelements angeordnet. Denkbar ist, dass die dritte Rolle nicht parallel zu den ersten beiden Rollen ausgerichtet ist. Vorzugsweise liegt jedoch die Ebene, die in Normalrichtung zur Drehachse der dritten Rolle liegt und durch die Mitte der dritten Rolle verläuft zwischen der ersten und der zweiten Rolle oder schneidet eine der beiden Rollen.

Gemäß einer weiteren vorteilhaften Ausführung der vorliegenden Erfindung weist die erste Rolle eine erste Führung auf und weist die zweite Rolle eine zweite Führung auf, zur Kontaktvermeidung des Endloszugmittels mit sich selbst. Selbstverständlich kann auch die dritte Rolle eine Führung aufweisen. Die Führungen können beispielsweise in Form von in Umfangsrichtung der Rollen umlaufenden Vertiefungen bzw. Nuten bestehen, um zum einen ein Runterrutschen des Endloszugmittels von einer Rolle zu verhindern und zum anderen eine Berührung des Endloszugmittels mit sich selber zu vermeiden. Prinzipiell kann aber auch jede andere denkbare und aus dem Stand der Technik bekannte Ausbildung einer Führung zum Einsatz kommen. Vorzugsweise sind die beiden Rollen unabhängig voneinander drehbar.

Gemäß einer besonders vorteilhaften Ausführung der vorliegenden Erfindung umfasst der Aktuator einen Zylinder und eine Kolbenstange. Zur Anwendung kann jedoch im Prinzip jede Art von Aktuator kommen, die geeignet ist, den nötigen Verfahrweg und die nötige Kraft aufzubringen, um das erste Umlenkelement relativ zum Endloszugmittel zu bewegen und das Endloszugmittel dadurch vorzuspannen.

Gemäß einer weiteren besonders vorteilhaften Ausführung der vorliegenden Erfindung umfasst der Aktuator einen regelbaren Hydraulikzylinder. Die Kolbenstange kann direkt mit dem ersten Umlenkelement in Eingriff stehen, wodurch die Bewegung der Kolbenstange direkt auf das Umlenkelement übertragen wird. Denkbar ist natürlich auch, dass die Kolbenstange und das erste Umlenkelement über eine Kinematik zusammenwirken und die Bewegung und die Kraft der Kolbenstange übersetzt wird. Verfahrweg und Kraft, die die Kolbenstange auf das erste Umlenkelement und damit auf das Endloszugmittel ausübt, können beispielsweise über ein hydraulisches System geregelt werden. Es ist ersichtlich, dass der Aktuator auch einen Pneumatikzylinder umfassen kann und zur Regelung der Kraft und des Verfahrwegs dann ein Pneumatiksystem notwendig ist.

Gemäß einer weiteren vorteilhaften Ausführung der vorliegenden Erfindung wirkt das erste Umlenkelement derart mit dem Aktuator zusammen, dass das erste Umlenkelement in Arbeitsrichtung des Aktuators bewegt wird, um die Vorspannung des Endloszugmittels zu ändern. Mit anderen Worten wird das erste Umlenkelement vorzugsweise entlang der Bewegung der Kolbenstange in Richtung Endloszugmittel bewegt oder vom Endloszugmittel wegbewegt, um die Vorspannung des Endloszugmittels zu verändern. Durch die als Flaschenzug wirkende Ausrichtung der Umlenkelemente in Zusammenspiel mit dem Endloszugmittel ist zwar im Vergleich zu den im Stand der Technik beschriebenen Spannmitteln durch den Aktuator eine erhöhte Kraft zur Vorspannung des Aktuators notwendig, dafür wird jedoch - in gewisser Weise als Umkehrung der Idee des Flaschenzugprinzips - der notwendige Verfahrweg verkürzt. Dies hat den Vorteil einer erhöhten Dynamik des Vorspannsystems, insbesondere bei langen Endloszugmitteln. Gleichzeitig bedeutet ein verkürzter Verfahrweg auch, dass für die Auslegung des Vorspannsystems ein geringerer Bauraum notwendig ist.

Es liegt im Wesen der vorliegenden Erfindung, dass das Flaschenzugprinzip zur Umsetzung einer Verkürzung des Verfahrwegs des Aktuators beliebig verändert oder erweitert werden kann. So ist für eine weitere Verringerung des notwendigen Verfahrwegs zur Vorspannung des Endloszugmittels denkbar, dass das erste Umlenkelement noch eine weitere Rolle umfasst und dass das zweite Umlenkelement noch eine weitere Rolle umfasst, sodass mittels einer weiteren Schlaufe des Endloszugmittels ein weiteres Paar aus fester und loser Rolle entsteht.

Das zweite Umlenkelement kann, von der Drehfreiheit abgesehen, feststehend ausgeführt sein. Denkbar ist allerdings, dass der Aktuator derart ausgeführt ist und das zweite Umlenkelement derart mit dem Aktuator zusammenwirkt, dass sich das zweite Umlenkelement in eine dem ersten Umlenkelement entgegengesetzte Richtung bewegt und dadurch auch einen Beitrag zur Vorspannung des Endloszugmittels leistet. Denkbar ist auch, dass das erste Umlenkelement fest ausgeführt ist, also die feste Rolle eines Flaschenzugs darstellt, und dass das zweite Umlenkelement durch den Aktuator relativ zum Endloszugmittel zugestellt werden kann, um die Vorspannung des Endloszugmittels zu ändern. In anderen Worten kann immer dann eine Veränderung der Vorspannung des Endloszugmittels erzeugt werden, wenn die beiden Umlenkelemente nicht mit dem gleichen Verfahrweg in die gleiche Richtung bewegt werden.

Gemäß einer weiteren vorteilhaften Ausführung der vorliegenden Erfindung ist das zweite Umlenkelement auf einer Linie mit der Arbeitsrichtung des Aktuators angeordnet. Im Sinne eines möglichst kompakten Aufbaus des Vorspannsystems ist es vorteilhaft, wenn das zweiten Umlenkelement möglichst nah am Aktuator vorgesehen ist. Das zweite Umlenkelement kann fest und nicht bewegbar am Aktuator angeordnet sein, es kann jedoch auch anderweitig befestigt sein. Wie oben bereits beschrieben, kann das zweite Umlenkelement auch derart ausführt sein, dass vom Aktuator relativ zum Endloszugmittel bewegt wird, um die Vorspannung des Endloszugmittels zu ändern. Bevorzugt ist jedenfalls das zweite Umlenkelement auf einer Linie, also fluchtend, mit der Arbeitsrichtung angeordnet. Das bedeutet, dass die Linie der Arbeitsrichtung das zweite Umlenkelement schneidet. Aus Bauraumgründen kann es jedoch auch notwendig sein, das zweite Umlenkelement mit einem Abstand zur Linie der Arbeitsrichtung des Aktuators anzuordnen.

Gemäß einer vorteilhaften Ausführung der vorliegenden Erfindung ist das Spannsystem auf ein als Stahlseil ausgeführtes Endloszugmittel ausgelegt. Das erfindungsgemäße dynamische Spannsystem lässt sich jedoch auch ohne Probleme auf Riemen, Ketten, Bänder oder andere aus dem Stand der Technik bekannte Endloszugmittel anwenden.

Ein Ausführungsbeispiel der vorliegenden Erfindung wird im Folgenden anhand von Zeichnungen näher erläutert.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen verwiesen.
- Figur 1a: zeigt eine schematische Darstellung des Zusammenwirkens eines erfindungsgemäßen dynamischen Spannsystems mit einem Endloszugmittel,
- Figur 1b: zeigt eine Seitenansicht der Figur 1b und
- Figur 2: zeigt eine Ausführung eines erfindungsgemäßen dynamischen Spannsystems.

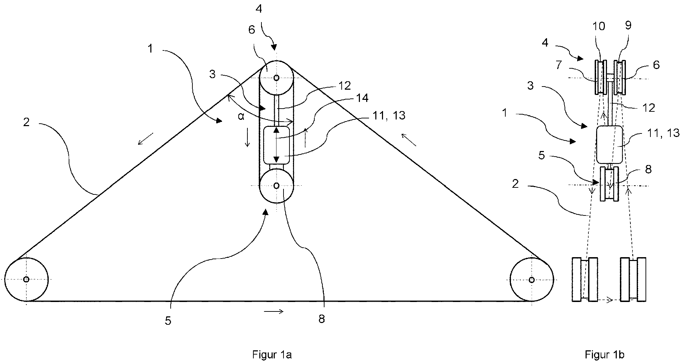

Figur 1a zeigt schematisch das Zusammenwirken eines erfindungsgemäßen dynamischen Spannsystems 1 mit einem Endloszugmittel 2. Das Endloszugmittel 2 wird von den beiden in der Darstellung unteren Spannrollen, von denen eine als Antriebsrolle ausgeführt ist, und dem dem dynamischen Spannsystem 1 zugeordneten ersten Umlenkelement 4 geführt und in Position gehalten. Das dynamische Spannsystem 1 umfasst einen Aktuator 3, der in der vorliegenden Ausführung einen Zylinder 11 und eine Kolbenstange 12 aufweist, wobei der Zylinder 11 als Hydraulikzylinder 13 ausgeführt ist. Der Aktuator 3 ist durch ein nicht dargestelltes hydraulisches Regelsystem regelbar. Das erste Umlenkelement 4 ist am Kolben 12 des Aktors 3 angeordnet und kann somit durch den Aktor 3 unmittelbar bewegt werden. Die Arbeitsrichtung 14 ist durch Pfeile verdeutlicht. Entlang dieser Richtung erfolgt auch die Zustellung des ersten Umlenkelements 4 relativ zum Endloszugmittel 2, wodurch die Vorspannung des Endloszugmittels 2 vergrößert oder verkleinert werden kann. Gut zu erkennen ist, dass das zweite Umlenkelement 5 am Aktuator befestigt ist und wie auch das erste Umlenkelement 4 fluchtend zur Arbeitsrichtung 14 des Aktors angeordnet ist.

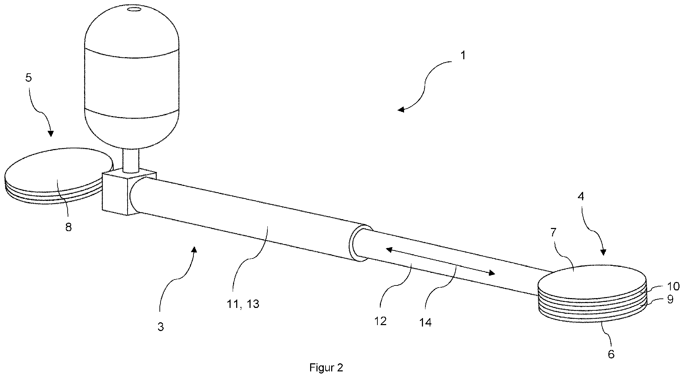

In Zusammenschau von Figur 1a mit Figur 1b und mit Figur 2, die eine Ausführung eines erfindungsgemäßen dynamischen Spannsystems 1 zeigt, wird zudem deutlich, dass in der dargestellten Ausführung das erste Umlenkelement 4 zwei Rollen 6, 7 umfasst, die gleich groß ausgeführt sind und deren Drehachsen 15, 16 koaxial zueinander ausgerichtet sind. Zudem sind die erste Rolle 6 und die zweite Rolle 7 unabhängig voneinander drehbar. Die dritte Rolle 8 ist derart angeordnet, dass ihre Drehachse 17 parallel und mit einem gewissen Abstand zu den Drehachsen 15, 16 der ersten Rolle 6 und der zweiten Rolle 7 ausgeführt ist. Zudem verläuft die in Normalrichtung zur Drehachse 17 ausgerichtete Mittelebene der dritten Rolle 8 zwischen den ersten beiden Rollen 6, 7. Gut zu erkennen sind in Figur 1b auch die als umlaufende Nuten ausgeführten Führungen 9, 10 der ersten und zweiten Rolle 6, 7, wobei die Führung der dritten Rolle 8 ebenso ausgeführt ist.

In Figur 1b ist das Endloszugmittel 2, das ein Stahlseil sein kann, durch eine gestrichelte Linie dargestellt, wobei die Pfeile die Bewegungsrichtung des jeweiligen Trums des Endloszugmittels 2 anzeigen. Es sei an dieser Stelle angemerkt, dass sich das Endloszugmittel 2 prinzipiell auch in die andere Richtung bewegen kann, wobei dann alle Pfeile in die entgegensetzte Richtung zeigen würden. Das Endloszugmittel 2 wird von der Spannrolle unten rechts in der Abbildung 1a zum dynamischen Spannsystem 1 umgelenkt. Innerhalb des dynamischen Spannsystems 1 wird das Endloszugmittel 2 von der ersten Rolle 6 zur dritten Rolle 8 und von der dritten Rolle 8 zur zweiten Rolle 7 umgelenkt. Durch diese spezielle Anordnung wirken die drei Rollen 6, 7, 8 als Flaschenzug zusammen, wobei das erste Umlenkelement 4 umfassend die erste Rolle 6 und die zweite Rolle 7 die sogenannte lose Rolle bildet und wobei das zweite Umlenkelement 5 umfassend die dritte Rolle 8 die feste Rolle bildet. Soll durch den Aktuator 3 nun das Endloszugmittel 2 stärker vorgespannt werden, wird die Kolbenstange 12 und mit ihr das erste Umlenkelement 4 in der Darstellung in Figur 1a nach oben bewegt. Im Vergleich zu einem konventionellen Spannsystem ohne zweites Umlenkelement 5, das mit dem ersten Umlenkelement 4 nach Art eines Flaschenzugs zusammenwirkt, ist für die gleiche Änderung der Vorspannung nur die Hälfte des Verfahrwegs der Kolbenstange 12 nötig, wobei natürlich der Aktuator entsprechend mehr Kraft aufbringen muss.

Figur 1a ist weiter zu entnehmen, dass der Umschlingungswinkel α der zweiten Rollen 7 weniger als 90° beträgt. Möglich ist jedoch auch, dass der Winkel genau 90° beträgt und dass die Umschlingungswinkel der ersten Rolle 6 und der zweiten Rolle 7 jeweils 90° betragen, sodass die Trums bei der Zuführung und bei der Wegführung vom Spannsystem 1 fluchtend zueinander ausgerichtet sind.

### Bezugszeichenliste:

- 1: Spannsystem
- 2: Endloszugmittel
- 3: Aktuator
- 4: erstes Umlenkelement
- 5: zweites Umlenkelement
- 6: erste Rolle
- 7: zweite Rolle
- 8: dritte Rolle
- 9: erste Führung
- 10: zweite Führung
- 11: Zylinder
- 12: Kolbenstange
- 13: Hydraulikzylinder
- 14: Arbeitsrichtung
- 15: Drehachse der ersten Rolle
- 16: Drehachse der zweiten Rolle
- 17: Drehachse der dritten Rolle
- α: Umschlingungswinkel

## Patentansprüche

1. Dynamisches Spannsystem (1) für Endloszugmittel (2) umfassend einen Aktuator (3) und ein erstes Umlenkelement (4), wobei der Aktuator (3) mit dem ersten Umlenkelement (4) zusammenwirkt und wobei der Aktuator (3) eine Zustellung des ersten Umlenkelements (4) relativ zum Endloszugmittel (2) ermöglicht, um die Vorspannung des Endloszugmittels (2) zu ändern, **dadurch gekennzeichnet, dass** das Endloszugmittel als Seil oder Kette ausgeführt ist und wobei das Spannsystem (1) ein zweites Umlenkelement (5) aufweist, wobei das zweite Umlenkelement (5) mit dem Endloszugmittel (2) in Eingriff steht und wobei das zweite Umlenkelement (5) eingerichtet ist, mit dem ersten Umlenkelement (4) und dem Endloszugmittel (2) in der Art eines Flaschenzugs zusammenzuwirken.

2. Dynamisches Spannsystem (1) nach Anspruch 1, **dadurch gekennzeichnet, dass** das erste Umlenkelement (4) eine erste Rolle (6) und eine zweite Rolle (7) umfasst, wobei die erste Rolle (6) und die zweite Rolle (7) derart angeordnet sind, dass das Endloszugmittel (2) von den beiden Rollen (6, 7) nacheinander umgelenkt wird.

3. Dynamisches Spannsystem (1) nach einem der Ansprüche 1 oder 2, **dadurch gekennzeichnet, dass** das zweite Umlenkelement (5) eine dritte Rolle (8) umfasst.

4. Dynamisches Spannsystem (1) nach einem der Ansprüche 2 oder 3, **dadurch gekennzeichnet, dass** das zweite Umlenkelement (5) derart angeordnet ist, dass das Endloszugmittel (2) zwischen den Umlenkungen durch die erste Rolle (6) und die zweite Rolle (7) vom zweiten Umlenkelement (5) umgelenkt wird.

5. Dynamisches Spannsystem (1) nach einem der Ansprüche 1 bis 4, **dadurch gekennzeichnet, dass** die erste Rolle (6) eine erste Führung (9) aufweist und die zweite Rolle (7) eine zweite Führung (10) aufweist, zur Kontaktvermeidung des Endloszugmittels (2) mit sich selbst.

6. Dynamisches Spannsystem (1) nach einem der Ansprüche 1 bis 5, **dadurch gekennzeichnet, dass** der Aktuator (3) einen Zylinder (11) und eine Kolbenstange (12) umfasst.

7. Dynamisches Spannsystem (1) nach Anspruch 6, **dadurch gekennzeichnet, dass** der Aktuator (3) einen regelbaren Hydraulikzylinder (13) umfasst.

8. Dynamisches Spannsystem (1) nach einem der Ansprüche 1 bis 7, **dadurch gekennzeichnet, dass** das erste Umlenkelement (4) derart mit dem Aktuator (3) zusammenwirkt, dass das erste Umlenkelement (4) in Arbeitsrichtung des Aktuators (3) bewegt wird, um die Vorspannung des Endloszugmittels (2) zu ändern.

9. Dynamisches Spannsystem (1) nach einem der Ansprüche 1 bis 8, **dadurch gekennzeichnet, dass** das zweite Umlenkelement (5) auf einer Linie mit der Arbeitsrichtung (14) des Aktuators (3) angeordnet ist.

10. Dynamisches Spannsystem (1) nach einem der Ansprüche 2 bis 9, **dadurch gekennzeichnet, dass** die erste Rolle (6) und die zweite Rolle (7) jeweils eine Drehachse aufweisen, wobei die Drehachsen im Wesentlichen koaxial zueinander ausgerichtet sind.

## Claims

1. Dynamic tensioning system (1) for endless traction devices (2) comprising an actuator (3) and a first deflection element (4), wherein said actuator (3) interacts with said first deflection element (4) and wherein said actuator (3) enables said first deflection element (4) to be moved relative to said endless traction device (2) for changing the pre-tension of said endless traction device (2), **characterized in that** the endless traction devices (2) is designed as a rope or a chain and the tensioning system (1) comprises a second deflection element (5), wherein said second deflection element (5) is in engagement with said endless traction device (2) and wherein said second deflection element (5) is configured to interact with said first deflection element (4) and said endless traction device (2) in the manner of a pulley.

2. Dynamic tensioning system (1) according to claim 1, **characterized in that** said first deflection element (4) comprises a first sheave (6) and a second sheave (7), wherein said first sheave (6) and said second sheave (7) are arranged such that said endless traction device (2) is deflected consecutively by said two sheaves (6, 7).

3. Dynamic tensioning system (1) according to one of the claims 1 or 2, **characterized in that** said second deflection element (5) comprises a third sheave (8).

4. Dynamic tensioning system (1) according to one of the claims 2 or 3, **characterized in that** said second deflection element (5) is arranged such that said endless traction device (2) is deflected by said second deflection element (5) between the deflections by said first sheave (6) and said second sheave (7).

5. Dynamic tensioning system (1) according to one of the claims 1 to 4, **characterized in that** said first sheave (6) comprises a first guide (9) and said second sheave (7) comprises a second guide (10) to prevent said endless traction device (2) from coming into contact with itself.

6. Dynamic tensioning system (1) according to one of the claims 1 to 5, **characterized in that** said actuator (3) comprises a cylinder (11) and a piston rod (12).

7. Dynamic tensioning system (1) according to claim 6, **characterized in that** said actuator (3) comprises a controllable hydraulic cylinder (13).

8. Dynamic tensioning system (1) according to one of the claims 1 to 7, **characterized in that** said first deflection element (4) interacts with said actuator (3) such that said first deflection element (4) is moved in the working direction of said actuator (3) for changing the pre-tension of said endless traction device (2).

9. Dynamic tensioning system (1) according to one of the claims 1 to 8, **characterized in that** said second deflection element (5) is arranged in line with said working direction (14) of said actuator (3).

10. Dynamic tensioning system (1) according to one of the claims 2 to 9, **characterized in that** said first sheave (6) and said second sheave (7) each have an axis of rotation, wherein said axes of rotation are aligned to be substantially coaxial with one another.

## Revendications

1. Système de tension dynamique (1) pour un moyen de traction sans fin (2) comprenant un actionneur (3) et un premier élément de renvoi (4), dans lequel l'actionneur (3) interagit avec le premier élément de renvoi (4) et l'actionneur (3) permet un positionnement du premier élément de renvoi (4) par rapport au moyen de traction sans fin (2) afin de modifier la précharge du moyen de traction sans fin (2),
**caractérisé en ce que** le moyen de traction sans fin est réalisé comme un câble ou une chaîne, et dans lequel le système de tension (1) comporte un deuxième élément de renvoi (5), le deuxième élément de renvoi (5) est engagé avec le moyen de traction sans fin (2), et le deuxième élément de renvoi (5) est configuré pour coopérer avec le premier élément de renvoi (4) et le moyen de traction sans fin (2) à la manière d'un palan.

2. Système de tension dynamique (1) selon la revendication 1, **caractérisé en ce que** le premier élément de renvoi (4) comprend un premier rouleau (6) et un deuxième rouleau (7), dans lequel le premier rouleau (6) et le deuxième rouleau (7) sont agencés de telle sorte que le moyen de traction sans fin (2) est renvoyé successivement par les deux rouleaux (6, 7).

3. Système de tension dynamique (1) selon l'une des revendications 1 et 2, **caractérisé en ce que** le deuxième élément de renvoi (5) comprend un troisième rouleau (8).

4. Système de tension dynamique (1) selon l'une des revendications 2 et 3, **caractérisé en ce que** le deuxième élément de renvoi (5) est agencé de telle sorte que le moyen de traction sans fin (2) est défléchi par le deuxième élément de renvoi (5) entre les renvois du premier rouleau (6) et du deuxième rouleau (7).

5. Système de tension dynamique (1) selon l'une des revendications 1 à 4, **caractérisé en ce que** le premier rouleau (6) comporte un premier guide (9) et le deuxième rouleau (7) comporte un deuxième guide (10) pour empêcher un contact avec le moyen de traction sans fin (2).

6. Système de tension dynamique (1) selon l'une des revendications 1 à 5, **caractérisé en ce que** l'actionneur (3) comprend un vérin (11) et une tige de piston (12).

7. Système de tension dynamique (1) selon la revendication 6, **caractérisé en ce que** l'actionneur (3) comprend un vérin hydraulique réglable (13).

8. Système de tension dynamique (1) selon l'une des revendications 1 à 7, **caractérisé en ce que** le premier élément de renvoi (4) interagit avec l'actionneur (3) de telle sorte que le premier élément de renvoi (4) est déplacé dans la direction de travail de l'actionneur (3) afin de modifier la précharge du moyen de traction sans fin (2).

9. Système de tension dynamique (1) selon l'une des revendications 1 à 8, **caractérisé en ce que** le deuxième élément de renvoi (5) est agencé en ligne avec la direction de travail (14) de l'actionneur (3).

10. Système de tension dynamique (1) selon l'une des revendications 2 à 9, **caractérisé en ce que** le premier rouleau (6) et le deuxième rouleau (7) ont chacun un axe de rotation, dans lequel les axes de rotation sont essentiellement coaxiaux.
